Europäisches Patentamt

European Patent Office

Office européen des brevets

(11) Publication number: **0 383 926 B1**

# EUROPEAN PATENT SPECIFICATION

(45) Date of publication of patent specification: **13.04.94**   (51) Int. Cl.5: **C08L 15/00**, C08L 9/02, C08K 5/09, B29D 23/00

(21) Application number: **89906450.5**

(22) Date of filing: **02.06.89**

(86) International application number:
**PCT/JP89/00556**

(87) International publication number:
**WO 89/12075 (14.12.89 89/29)**

(54) **HIGH-PRESSURE HOSE.**

(30) Priority: **03.06.88 JP 136808/88**

(43) Date of publication of application:
**29.08.90 Bulletin 90/35**

(45) Publication of the grant of the patent:
**13.04.94 Bulletin 94/15**

(84) Designated Contracting States:
**DE GB IT**

(56) References cited:
**JP-A-58 118 371**
**JP-A-58 201 830**
**JP-B- 5 545 086**

(73) Proprietor: **NIPPON ZEON CO., LTD.**
**6-1, Marunouchi 2-chome**
**Chiyoda-ku Tokyo 100(JP)**

(72) Inventor: **OYAMA, Motofumi**
**5-27-6, Hailando**
**Yokosuka-shi Kanagawa 239(JP)**
Inventor: **TOYA, Takashi**
**873, Taibi-cho**
**Kohoku-ku**
**Yokohama-shi Kanagawa 222(JP)**
Inventor: **SAITO, Yoshiomi**
**1-13-1, Misora**
**Yotsukaido-shi Chiba 284(JP)**

(74) Representative: **Myerscough, Philip Boyd et al**
**J.A.KEMP & CO.**
**14, South Square**
**Gray's Inn**
**London WC1R 5LX (GB)**

EP 0 383 926 B1

**Description**

Field of Industrial Utilization

This invention relates to a high-pressure hose, and more specifically, to a high-pressure hose which has excellent mechanical strength, heat resistance and adhesion to steel wires used as a hose-reinforcing layer.

Prior Art

The high-pressure hose is a hose used as part of a piping for forming a high hydraulic pressure (oil or water pressure) circuit, and consists of an inside rubber layer, a reinforcing layer and an outside layer in which steel wires are used as the reinforcing layer. The high-pressure hose is used for a long period of time with heated oils under high pressures in automobiles, construction machinery and hydraulic devices. Chloroprene rubber, acrylonitrile/butadiene copolymer rubbers (NBR), acrylic rubber and nitrile group-containing highly saturated rubbers (for example, hydrogenated NBR) are known as a rubber material from which the high-pressure hose used under these conditions is made.

It is generally known that hydrogenated NBR having a low iodine number gives vulcanizates having excellent heat resistance and oil resistance. It is also known that the use of an organic peroxide is necessary for its vulcanization.

However, a rubber composition comprising a blend of the hydrogenated NBR and an organic peroxide has poor adhesion to steel wires as the hose reinforcing layer, and various proposals have been made to improve its adhesion. For example, a rubber composition obtained by blending hydrogenated NBR containing a sulfur compound bondable to steel wires with an organic peroxide is known to be used as an adhesive layer as in the method described in Japanese Laid-Open Patent Publication No. 108042/1987. This adhesive layer, however cannot be used alone as an inside rubber layer of a high-pressure hose because the resulting vulcanizate has much lower mechanical strength and heat-aging resistance than a vulcanizate of a rubber composition not containing the sulfur compound.

Furthermore, a rubber composition for use in the high-pressure hose requires high tensile stress, and therefore, it is the practice to incorporate large amounts of carbon black and various silicic acid-type rubber reinforcing agents. However, if the amounts of these materials to be incorporated are increased, the viscosity of the unvulcanized rubber compound increases and it becomes difficult to extrude. Hence, the amounts of these compounds that can be blended are limited.

According to this invention, there is provided a high-pressure hose composed of a vulcanizate of a composition comprising a nitrile group-containing highly saturated rubber having a nitrile group content of 10 to 60% by weight and an iodine number of not more than 60, zinc methacrylate and 0.2 to 10 parts by weight, per 100 parts by weight of the rubber, of an organic peroxide. The high-pressure hose of the invention can be prepared by adding a zinc compound and methacrylic acid to the highly saturated rubber to form zinc methacrylate in the rubber and then incorporating the organic peroxide to form a vulcanizable composition, and shaping and vulcanizing the vulcanizable composition.

One example of the nitrile group-containing highly saturated rubber used in this invention is rubber obtained by hydrogenating the conjugated diene units of a copolymer rubber composed of an ethylenically unsaturated nitrile such as acrylonitrile, methacrylonitrile or alphachloroacrylonitrile and a conjugated diene such as 1,3-butadiene, isoprene, 1,3-pentadiene or 2,3-dimethyl-1,3-butadiene. Another example is a copolymer rubber composed of the above ethylenically unsaturated nitrile, the conjugated diene, and at least one monomer copolymerizable with these, or rubber obtained by hydrogenating the conjugated diene units of the copolymer rubber. Examples of the copolymerizable monomer include ethylenically unsaturated carboxylic acid esters such as methyl (meth)acrylate, ethyl (meth)acrylate, propyl (meth)acrylate, butyl (meth)acrylate, methoxyethyl (meth)acrylate and ethoxyethyl (meth)acrylate; and cyanosubstituted alkyl esters of (meth)acrylic acid such as cyanomethyl (meth)acrylate, 1- or 2-cyanoethyl (meth)-acrylate, 1-cyanopropyl (meth)acrylate, 4-cyanobutyl (meth)acrylate, 6-cyanohexyl (meth)acrylate, 2-ethyl-6-cyanohexyl (meth)acrylate and 8-cyanooctyl (meth)-acrylate.

The amount of the ethylenically unsaturated nitrile monomer units in the nitrile group-containing highly saturated rubber is 10 to 60 % by weight. If it is less than 10 % by weight, the oil resistance of the rubber is not sufficient. If it exceeds 60 % by weight, the elasticity of the rubber undesirably decreases.

The nitrile group-containing highly saturated rubber has an iodine number of not more than 60. If its iodine number exceeds 60, the resulting hose has inferior heat resistance and mechanical strength. Preferably it has an iodine number of not more than 45, and especially not more than 20.

EP 0 383 926 B1

The organic peroxide used in this invention may be any of those which are usually employed in peroxide vulcanization of rubber. Examples include dicumyl peroxide, di-t-butyl peroxide, t-butylcumyl peroxide, benzoyl peroxide, 2,5-dimethyl-2,5-di(t-butylperoxy)-hexyne-3, 2,5-dimethyl-2,5-di(benzoylperoxy)-hexane and 2,5-dimethyl-2,5-mono(t-butylperoxy)-hexane At least one of these organic peroxides is used in a total amount of usually 0.2 to 10 parts by weight per 100 parts by weight of the rubber. Its optimal amount may be determined according to the required physical property.

Usually, zinc methacrylate prepared in advance may be added to the rubber. At times, it may be prepared in situ by separately adding methacrylic acid and a zinc compound to the rubber during the production of the rubber composition and reacting them to produce zinc methacrylate in situ. Any zinc compound which can form a salt with methacrylic acid may be used, but zinc oxide, zinc hydroxide and zinc carbonate are preferred.

The amount of zinc methacrylate used is not particularly limited, but is preferably 3 to 80 parts by weight per 100 parts by weight of the rubber. If it is less than 3 parts by weight, the vulcanized rubber has inferior mechanical strength and inferior adhesion to steel wires. If it exceeds 80 parts by weight, the permanent compression of the vulcanized rubber becomes high. The preferred amount of zinc methacyrlate is in the range of 15 to 70 % by weight.

According to the use of the high-pressure hose, various chemicals used in the rubber industry may be incorporated together with the above components. Examples of the chemicals are reinforcing agents such as carbon black and silica, fillers such as calcium carbonate and talc, curing coagents such as triallyl isocyanurate and trimethylolpropane, sulfur, various vulcanization accelerators, plasticizers, stabilizers, processing aids and coloring agents. The rubber composition may be prepared by using an ordinary mixer such as a roll or a Banbury mixer.

Effects of the Invention

The present invention can give a high-pressure hose having excellent mechanical strength, heat resistance and adhesion to steel wires as a hose-reinforcing layer.

The rubber composition used as a raw material for the high-pressure hose of this invention has higher tensile stress than a conventional rubber composition. Furthermore because of its lower viscosity, it has excellent extrudability.

The high-pressure hose of this invention is useful as a hydraulic hose or a crude oil or high pressure gas transfer hose in construction machinery such as power shovel and bulldozers, various types of motor vehicles, and oil field excavating machines.

Examples

The following examples illustrate the invention more specifically. All parts and percentages in Examples and Comparative Examples are by weight unless specified otherwise.

Example 1

Emulsion-polymerized acrylonitrile/butadiene copolymer rubber (NBR) (E) and butadiene/butyl acrylate/-acrylonitrile polymer rubber (H) indicated in Table 1 were dissolved in methyl isobutyl ketone, and hydrogenated by using a Pd-carbon catalyst to prepare hydrogenated NMR (A to D) and hydrogenated acrylonitrile/butadiene/butyl acrylate terpolymer rubbers (F and G) having the iodine numbers indicated in Table 1.

By using these rubbers, rubber compositions were prepared in accordance with the compounding recipes indicated in Table 2.

3

## Table 1

| Rubber No. Composition | Hydrogenated NBR | | | | | Hydrogenated acrylonitrile butadiene/ butyl acrylate copolymer rubber | | |
|---|---|---|---|---|---|---|---|---|
| | A | B | C | D | E | F | G | H |
| Bound acrylonitrile (wt.%) | 45 | 37 | 33 | 37 | 37 | 35 | 35 | 35 |
| Butyl acrylate unit portion (% by weight) | – | – | – | – | – | 60 | 35 | 35 |
| Iodine number | 15 | 2 | 45 | 70 | 280 | 23 | 11 | 138 |

The viscosities of these unvulcanized rubber compositions were measured at 100 °C in accordance with JIS K-6300. The results are shown in Table 2.

These compositions were press-cured under the compositions shown in Table 2 to form 2 mm-thick vulcanized sheets. The properties of these sheets were measured in accordance with JIS K-6301. The results are shown in Table 2.

The adhesion of the rubber composition to metal was measured at a tensile speed of 50 mm/min. on a test sample vulcanized under the conditions shown in Table 2 in accordance with the "90° Peeling Test" of JIS-6301. The adhesion strength and the rubber fractured area (%) are shown in Table 2.

### Example 2

Rubber compositions were prepared in accordance with the compounding recipes shown in Table 3 using the rubbers shown in Table 1. After the viscosities of the rubber compositions were measured, they were press-cured under the vulcanization conditions shown in Table 3. Under the same conditions as in Example 1, the properties of the vulcanizates were measured and the same metal bonding test was carried out. The results obtained are shown in Table 3.

4

## Table 2

| Run No. Compounding recipe | Comparison | | | | | Invention | | | | | | |
|---|---|---|---|---|---|---|---|---|---|---|---|---|
| | 1 | 2 | 3 | 4 | 5 | 6 | 7 | 8 | 9 | 10 | 11 | 12 |
| Rubber No. | D | E | H | H | H | A | B | C | F | G | G | C |
| Rubber | 100 | 100 | 100 | 100 | 100 | 100 | 100 | 100 | 100 | 100 | 100 | 100 |
| Zinc oxide | 5 | 5 | 5 | 5 | 20 | 5 | 5 | 5 | 5 | 5 | 20 | 20 |
| HAF carbon black | 30 | 30 | 30 | 30 | 30 | 30 | 30 | 30 | 30 | 30 | 30 | 30 |
| Zinc dimethacrylate | 20 | 20 | 20 | 20 | – | 20 | 20 | 20 | 20 | 20 | – | – |
| PER HEXYNE 2.5 B-40 * | 2 | 2 | 2 | 6 | 2 | 6 | 6 | 6 | 6 | 6 | 6 | 6 |
| methacrylic acid | – | – | – | – | 10 | – | – | – | – | – | 10 | 10 |
| Mooney viscosity of the compound $(ML_{1+4}$ 100 °C) | 106.5 | 110.5 | 108 | 106 | 103.5 | 99.0 | 101.5 | 96.5 | 93.5 | 95.0 | 96.5 | 97.5 |

(continued)

EP 0 383 926 B1

Table 2 (continued)

| Run No. Compounding recipe | Comparison | | | | | Invention | | | | | | |
|---|---|---|---|---|---|---|---|---|---|---|---|---|
| | 1 | 2 | 3 | 4 | 5 | 6 | 7 | 8 | 9 | 10 | 11 | 12 |
| Vulcanization conditon   Temperature (°C)   Time (minutes) | 170 60 | | | | | 170 60 | | | | | | |
| **Tensile test** | | | | | | | | | | | | |
| Tensile strength $(kg/cm^2)$ | 236 | 165 | 148 | 151 | 153 | 378 | 337 | 325 | 315 | 335 | 391 | 359 |
| Elongation (%) | 240 | 140 | 160 | 120 | 150 | 440 | 410 | 400 | 410 | 390 | 410 | 420 |
| Hardness (JIS) | 80 | 79 | 75 | 77 | 75 | 79 | 78 | 78 | 78 | 77 | 78 | 78 |
| **Air heat aging test** (150 °C, 10 days) | | | | | | | | | | | | |
| Tensile strength $(kg/cm^2)$ | 126 | ** | 127 | ** | 105 | 244 | 229 | 215 | 204 | 223 | 258 | 239 |
| Elongation (%) | 60 | ** | 50 | ** | 60 | 120 | 180 | 130 | 110 | 130 | 150 | 140 |
| Hardness (JIS) | 90 | 96 | 93 | 97 | 91 | 86 | 84 | 85 | 86 | 84 | 85 | 85 |

Table 2 (continued)

| Run No. | Comparison | | | | | Invention | | | | | | |
|---|---|---|---|---|---|---|---|---|---|---|---|---|
| Compounding recipe | 1 | 2 | 3 | 4 | 5 | 6 | 7 | 8 | 9 | 10 | 11 | 12 |
| 90° Peeling test with respect to a metal plate | | | | | | | | | | | | |
| (1) Mild steel plate Adhesion strength (kgf/cm) | 7.9 | 6.3 | 3.9 | 4.5 | 2.1 | 9.4 | 9.1 | 10.5 | 11.5 | 12.3 | 10.4 | 9.7 |
| Fractured part Rubber fractured area (%) | 95 | 90 | 20 | 20 | 0 | 100 | 100 | 100 | 100 | 100 | 100 | 100 |
| (2) Brass plate Adhesion strength (kgf/cm) | 7.4 | 6.2 | 3.3 | 4.7 | 1.6 | 9.3 | 9.2 | 10.7 | 10.4 | 11.1 | 9.8 | 9.4 |
| Fractured part Rubber fractured area (%) | 95 | 40 | 30 | 20 | 0 | 100 | 100 | 100 | 100 | 100 | 100 | 100 |

\* 1,3-bis(tert-butylperoxyisopropyl)benzene
\*\* Measurement impossible because cracking or breakage occurred by bending of the sample during measurement.

Table 3

| Run No.<br>Compounding recipe | Comparison | | | | | | | Invention | | | | | |
|---|---|---|---|---|---|---|---|---|---|---|---|---|---|
| | 13 | 14 | 15 | 16 | 17 | 18 | 19 | 20 | 21 | 22 | 23 | 24 | 25 |
| Rubber E | 100 | 100 | 100 | 100 | 100 | 100 | | | | | | | |
| Rubber B | | | | | | | 100 | 100 | 100 | 100 | 100 | 100 | 100 |
| Zinc oxide | 5 | 5 | 5 | 5 | 5 | 5 | 5 | 5 | 5 | 5 | 5 | 5 | 5 |
| Carbon black | 80 | 60 | 40 | 20 | – | 40 | 80 | 60 | 40 | 20 | – | – | – |
| Zinc dimethacrylate | – | 10 | 20 | 30 | 40 | 20 | – | 10 | 20 | 30 | 40 | 30 | 60 |
| PERHEXYNE 2.5 B–40 | 2 | 2 | 2 | 2 | 2 | 6 | 6 | 6 | 6 | 6 | 6 | 6 | 6 |
| Mooney viscosity of the compound $(ML_{1+4}$ 100 °C) | 160.5 | 145.0 | 126.0 | 109.5 | 78.0 | 122.5 | 155.5 | 121.0 | 99.0 | 85.5 | 77.5 | 76.0 | 79.5 |

Table 3 (continued)

| Compounding recipe / Run No. | Comparison | | | | | | | Invention | | | | | |
|---|---|---|---|---|---|---|---|---|---|---|---|---|---|
| | 13 | 14 | 15 | 16 | 17 | 18 | 19 | 20 | 21 | 22 | 23 | 24 | 25 |
| Vulcanization conditon — Temperature (°C) / Time (minutes) | 170 60 | | | | | | | 170 60 | | | | | |
| Tensile test | | | | | | | | | | | | | |
| Tensile strength (kg/cm$^2$) | 274 | 253 | 210 | 178 | 159 | 175 | 343 | 398 | 460 | 410 | 340 | 379 | 389 |
| Elongation (%) | 210 | 180 | 150 | 130 | 100 | 100 | 240 | 340 | 370 | 340 | 200 | 430 | 120 |
| Hardness (JIS) | 84 | 85 | 83 | 82 | 82 | 86 | 87 | 88 | 89 | 89 | 90 | 75 | 93 |
| Air heat aging test (150 °C, 10 days) | Measurement impossible (cracked or broken upon bending) | | | | | | | | | | | | |
| Tensile strength (kg/cm$^2$) | | | | | | | 224 | 283 | 288 | 252 | 249 | 312 | 146 |
| Elongation (%) | | | | | | | 90 | 120 | 110 | 130 | 100 | 180 | 70 |
| Hardness (JIS) | 98 | 98 | 98 | 98 | 98 | 100 | 93 | 94 | 94 | 94 | 95 | 84 | 96 |

(continued)

EP 0 383 926 B1

Table 3 (continued)

| Run No.<br>Compounding recipe | Comparison | | | | | | | Invention | | | | | |
|---|---|---|---|---|---|---|---|---|---|---|---|---|---|
| | 13 | 14 | 15 | 16 | 17 | 18 | 19 | 20 | 21 | 22 | 23 | 24 | 25 |
| 90° Peeling test with respect to a metal plate | | | | | | | | | | | | | |
| (1) Mild steel plate<br>Adhesion strength (kgf/cm2) | 1.1 | 4.1 | 8.4 | 8.5 | 8.5 | 7.5 | 1.2 | 9.3 | 12.5 | 14.2 | 10.5 | 11.3 | 10.2 |
| Fractured part<br>Rubber fractured area (%) | 0 | 10 | 85 | 90 | 90 | 90 | 0 | 95 | 100 | 100 | 100 | 100 | 100 |

## Claims

1. A high pressure hose composed of a vulcanizate of a composition comprising a nitrile group-containing highly saturated rubber having a nitrile group content of 10 to 60% by weight and an iodine number of not more than 60, zinc methacrylate and 0.2 to 10 parts by weight, per 100 parts by weight of the rubber, of an organic peroxide.

2. A process for preparing a hose as claimed in claim 1 which comprises adding a zinc compound and methacrylic acid to the highly saturated rubber to form zinc methacrylate in the rubber and then incorporating the organic peroxide to form a vulcanizable composition, and shaping and vulcanising the vulcanizable composition.

**Patentansprüche**

1. Hochdruckschlauch, bestehend aus einem Vulkanisat einer Masse, umfassend einen Nitrilgruppen-haltigen hochgesättigten Kautschuk mit einem Nitrilgruppengehalt von 10 bis 60 Gew.-% und einer Iodzahl von nicht mehr als 60, Zinkmethacrylat und 0,2 bis 10 Gew.-Teile auf 100 Gew.-Teile des Kautschuks eines organischen Peroxids.

2. Verfahren zur Herstellung eines Schlauchs nach Anspruch 1, umfassend die Zugabe einer Zinkverbindung und von Methacrylsäure zu dem hochgesättigten Kautschuk unter Bildung von Zinkmethacrylat in dem Kautschuk und anschließendes Einbringen des organischen Peroxids unter Bildung einer vulkanisierbaren Masse und Formen und Vulkanisieren der vulkanisierbaren Masse.

**Revendications**

1. Tuyau souple à haute pression en un produit de la vulcanisation d'une composition comportant un caoutchouc hautement saturé contenant un groupe nitrile avec une teneur en groupe nitrile de 10 à 60% en poids et un indice d'iode inférieur à 60, un méthacrylate de zinc et 0,2 à 10 parts en poids d'un peroxyde organique, pour 100 parts en poids du caoutchouc.

2. Procédé de préparation d'un tuyau selon la revendication 1 comportant l'addition d'acide méthacrylique et d'un composé du zinc au caoutchouc hautement saturé pour former du méthacrylate de zinc dans le caoutchouc et ensuite l'incorporation du peroxyde organique pour former une composition vulcanisable, et la mise en forme et la vulcanisation de la composition vulcanisable.